# EUROPÄISCHE PATENTSCHRIFT

(11) **EP 2 352 379 B1**
(45) Veröffentlichungstag und Bekanntmachung des Hinweises auf die Patenterteilung: **21.08.2013**
(21) Anmeldenummer: 09752119.9
(22) Anmeldetag: 04.11.2009
(51) Int. Cl.: A21C 3/04, A21C 5/00, A21C 9/08, A21C 13/00

(54) **VERFAHREN ZUR HERSTELLUNG VON BACKGUT SOWIE ANLAGE ZUR AUTOMATISCHEN HERSTELLUNG VON BACKGUT**
METHOD FOR THE PRODUCTION OF BAKED GOODS, AND PLANT FOR THE AUTOMATIC PRODUCTION OF BAKED GOODS
PROCEDE DE PRODUCTION DE PRODUITS DE BOULANGERIE ET INSTALLATION POUR LA PRODUCTION AUTOMATIQUE DE PRODUITS DE BOULANGERIE

(30) Priorität: 12.11.2008 DE 102008056881
(43) Veröffentlichungstag der Anmeldung: 10.08.2011
(73) Patentinhaber: Werner & Pfleiderer Industrielle Backtechnik GmbH, 71732 Tamm (DE)
(72) Erfinder: GROTE, Bernd, 71732 Tamm (DE); BENZ, Uwe, 89537 Giengen (DE)
(74) Vertreter: Rau, Schneck & Hübner
(86) Internationale Anmeldenummer: PCT/EP2009/007899
(87) Internationale Veröffentlichungsnummer: WO 2010/054773

(56) Entgegenhaltungen:
- EP-A1- 0 548 482
- DE-A1- 1 906 825
- DE-A1- 4 442 934
- DE-A1- 10 136 980
- DE-U1-202006 015 161

## Beschreibung

Die Erfindung betrifft ein Verfahren zur Herstellung von Backgut. Ferner betrifft die Erfindung eine Anlage zur automatischen Herstellung von Backgut.

Ein Backgut-Herstellungsverfahren sowie eine Anlage zur automatischen Herstellung von Backgut sind durch offenkundige Vorbenutzung bekannt. Beim bekannten automatischen Herstellungsverfahren kommen insbesondere eine Teigteilmaschine, ein Rundwirker und ein Zwischengärschrank zum Einsatz.

Aus der DE 44 42 934 A1 ist ein Verfahren nach dem Oberbegriff des Anspruchs 1 und eine Vorrichtung nach dem Oberbegriff des Anspruchs 7 zum Herstellen von Feinmehlbrot bekannt. Die DE 101 36 980 A1 offenbart ein Verfahren und eine Vorrichtung zur Bestimmung der Masse eines Teigbandabschnittes. Die DE 1 906 825 A beschreibt eine Teigwirkmaschine.

Die EP 0 548 482 A1 beschreibt ein Verfahren zur Teigbearbeitung und eine Vorrichtung zur Ansteuerung einer hierzu dienenden Kopfmaschine und wenigstens einer Nachfolgeeinrichtung.

Es ist eine Aufgabe der vorliegenden Erfindung, den Durchsatz eines Herstellungsverfahrens sowie einer automatischen Herstellungsanlage der eingangs genannten Art zu vergrößern und dabei nach Möglichkeit den Anlagenaufwand gering zu halten.

Diese Aufgabe ist, was das Herstellungsverfahren angeht, erfindungsgemäß gelöst durch ein Verfahren mit den im Anspruch 1 angegebenen Verfahrensschritten.

Mit dem erfindungsgemäßen Herstellungsverfahren ist ein quasi kontinuierlicher Herstellungsprozess möglich. Die Teigstrangextrusion ermöglicht einen sehr hohen Teigdurchsatz des Verfahrens. Durch den Wegfall der herkömmlichen Verfahrensschritte Teigteilen in einer Teigteilmaschine und Rundwirken ergibt sich eine deutliche Prozessvereinfachung. Aufgrund der Teigstrangverarbeitung lassen sich insbesondere sehr lange Teigstrang-Abschnitte verbacken, die beispielsweise 3 m oder 1,5 m lang sein können. Dies reduziert den Abfall im Vergleich zu einem herkömmlichen Herstellverfahren insbesondere bei der Herstellung von Toastbrot. Die Extrusion des Teigstrangs führt zur Möglichkeit, qualitativ sehr hochwertiges Backgut mit einer ansprechenden, gleichmäßigen Porenverteilung und Porengröße herzustellen. Das Bereitstellen der Ausgangsprodukte zum zu knetenden Teig kann auch durch kontinuierliche Zuführung der Ausgangsprodukte geschehen. Die Bereitstellung kann also durch Zuführung oder Zuförderung der Ausgangsprodukte erfolgen. Zwischen dem Portionieren des Teigstrangs in Teigstrang-Abschnitte und dem Zuführen der Teigstrang-Abschnitte zu den zugeordneten Aufnahmen kann noch ein Nachformschritt zur Formgebung des Teigstrang-Abschnitts liegen. Bei den den Teigstrang-Abschnitten zugeordneten Aufnahmen in der mindestens einen Transportform sowie bei der Transportform selbst kann es sich um Backformen handeln. Bei den Aufnahmen und den Transportformen kann es sich auch um Gärträger handeln. In diesem Fall können die Teigstrang-Abschnitte vor einem abschließenden Backvorgang von den Gärträgern getrennt werden, so dass die Gärträger nicht Backtemperaturen ausgesetzt zu sein brauchen. Mit dem erfindungsgemäßen Herstellungsverfahren ist insbesondere eine genaue Vorgabe, insbesondere eine genaue Gewichtsvorgabe, der portionierten Teigstrang-Abschnitte möglich. Dies führt zu einer vorteilhaften Verringerung der Massetoleranzen bei den fertig gebackenen Teigstrang-Abschnitten. Gerade dann, wenn sehr lange Teigstrang-Abschnitte verarbeitet werden, verringert sich bei gegebenem Volumen-Durchsatz die Anzahl der Endstücke, also der beiderseitigen Enden der Teigstrang-Abschnitte, erheblich. Entsprechend verringert ist der Produktabfall bei der Backgutherstellung. Das Zuführen der Teigstrang-Abschnitte zu den zugeordneten Aufnahmen in der mindestens einen Transportform kann mit einer hohen Positioniergenauigkeit erfolgen, die insbesondere besser sein kann als +/- 10 mm in Querrichtung und/oder in Längsrichtung der Teigstrang-Abschnitte. Dies stellt sicher, dass die Teigstrang-Abschnitte beim Zuführen in die Aufnahmen nicht unerwünscht, beispielsweise durch Aufprall auf Seitenwände der Aufnahmen, verdichtet werden, was zu einer unerwünschten Abweichung des Backergebnisses beitragen würde. Nach dem Extrudieren des Teigstrangs und vor dem Portionieren von diesem wird das Volumen des Teigstrangs gemessen. Eine derartige Volumenmessung verbessert die Portioniergenauigkeit des Herstellungsverfahrens.

Eine Dichtemessung nach Anspruch 2 verbessern die Portioniergenauigkeit des Herstellungsverfahrens. Wenn die Dichte des extrudierten Teigstrangs innerhalb vorgegebener Grenzen konstant ist, kann auf eine Dichtemessung verzichtet werden, was das Verfahren vereinfacht.

Eine Messstation nach Anspruch 3 kann insbesondere modular aufgebaut sein, so dass verschiedene Typen von Messstationen nacheinander oder untereinander austauschbar angeordnet sein können.

Eine optische Vermessung nach Anspruch 4 kann sehr präzise durchgeführt werden. Hierbei kann eine optische 3D-Scanmessung oder eine sonstige aus der optischen Bildverarbeitung bekannte bildgebende Messtechnik zum Einsatz kommen.

Eine Dichtemessung nach Anspruch 5 führt zu einem sehr präzisen Dichte-Messergebnis. Alternativ kann eine Dichtemessung auch durch eine elektrische Leitwertmessung bzw. eine kapazitive Sensorik des Teigstrangs erfolgen.

Ein Strangrollen zum Nachformen der Teigstrang-Abschnitte nach Anspruch 6 optimiert die Konsistenz des hergestellten Backguts. Das Ergebnis des Strangrollens ist ein im Wesentlichen zylindrischer Teigabschnitt.

Was die Anlage angeht, ist die eingangs genannte Aufgabe erfindungsgemäß gelöst durch die im Anspruch 7 genannten Merkmale.

Die Vorteile der erfindungsgemäßen Anlage entsprechen denen, die vorstehend im Zusammenhang mit dem erfindungsgemäßen Herstellungsverfahren bereits genannt wurden. Bei der erfindungsgemäßen Anlage kann auf eine herkömmliche Teigteilmaschine, wie diese beispielsweise aus der EP 1 424 900 A2 bekannt ist, sowie auf einen ebenfalls hieraus bekannten Rundwirker verzichtet werden. Mit der erfindungsgemäßen Anlage kann eine Produktion von beispielsweise 12.000 Toastbroten mit jeweils 500 g pro Stunde erreicht werden. Die Kneteinrichtung und der Extruder der Anlage können in einem Wellen-Teigkneter kombiniert sein. Dabei können insbesondere zwei Knet-Extruderwellen zum Einsatz kommen. Der Kneteinrichtung kann eine Zuführeinrichtung zur insbesondere automatischen Zuführung der Ausgangsprodukte zur Herstellung des zu knetenden Teigs vorgeordnet sein. Der Extruder kann eine Einzeldüse, eine Doppeldüse oder auch eine Mehrzahl separater einzelner Düsen aufweisen. Die Volumen-Messeinrichtung kann als optische Abtasteinrichtung ausgeführt sein.

Eine Nachbereitungsvorrichtung nach Anspruch 8 kann an den Durchsatz der Teigstrangextrusion angepasst werden. Der Gärschrank kann als Paternoster-Gärschrank ausgebildet sein. Beim Gärschrank kann es sich um einen Nachgärschrank handeln. Eine Unterteilung des Gärprozesses in ein Vorgären und ein Nachgären entfällt.

Die Vorteile von Portioniereinrichtungen nach den Ansprüchen 9 bis 10 entsprechen denen, die vorstehend im Zusammenhang mit dem Herstellungsverfahren bereits diskutiert wurden. Eine Portionierung kann alternativ auch durch Wiegen auf einem Wägeband, z. B. mittels Wiegezellen, erfolgen. Die Dichte-Messeinrichtung kann eine Röntgen-Durchstrahleinrichtung aufweisen.

Die optische Abtasteinrichtung kann eine den Teigstrang von oben beleuchtende Scaneinrichtung sein. Alternativ können auch mehrere derartige Scaneinrichtungen als Teil der optischen Abtasteinrichtung vorgesehen sein, die sich beispielsweise zu einem 3D-Scanner zur optischen Erfassung des gesamten Teigstrangvolumens ergänzen können. Die optische Abtasteinrichtung kann zwei Scaneinrichtungen aufweisen, die den Teigstrang von oben und von unten oder auch von beiden Seiten quer zur Transportrichtung her erfassen. Auch eine Anordnung mit zwei Scaneinrichtungen, die den Teigstrang beide von oben, aber aus verschiedenen Erfassungsrichtungen, abtasten, ist möglich. Bei einer Erfassung des Teigstrangs von unten her kann dies insbesondere auch durch ein für das Abtastlicht der Scaneinrichtung lichtdurchlässiges Transportband erfolgen. Ein derartiges Teigstrang-Transportband kann als Netz oder aus einem für das Abtastlicht zumindest teilweise transparenten Material ausgeführt sein. Eine Erfassung des Teigstrangs durch eine Scaneinrichtung von unten kann auch durch eine derart freie Führung des Teigstrangs erfolgen, dass der Teigstrang zumindest in einem Abschnitt von unten her frei zugänglich ist.

Ein Strangroller nach Anspruch 11 kann Teil der Übergabeeinrichtung der Anlage sein.

Zwei Strangroller nach Anspruch 12 erhöhen den Durchsatz der Nachbereitungsvorrichtung.

Entsprechendes gilt für eine Übergabeeinrichtung und eine Transportform-Fördereinrichtung nach Anspruch 13.

Ein Ausführungsbeispiel der Erfindung wird nachfolgend anhand der Zeichnung näher erläutert. In dieser zeigen:
- Fig. 1: schematisch in einer Aufsicht die Hauptkomponenten einer Anlage zur automatischen Herstellung von Toastbrot;
- Fig. 2: perspektivisch Hauptkomponenten eines Zweiwellen-Teigkneters zum Kneten und zum Extrudieren eines Toastbrot-Teigs;
- Fig. 3: schematisch im Längsschnitt einen gebrochenen Abschnitt eines Gehäuses einer weiteren Ausführung des Teigkneters im Bereich einer der Wellen.

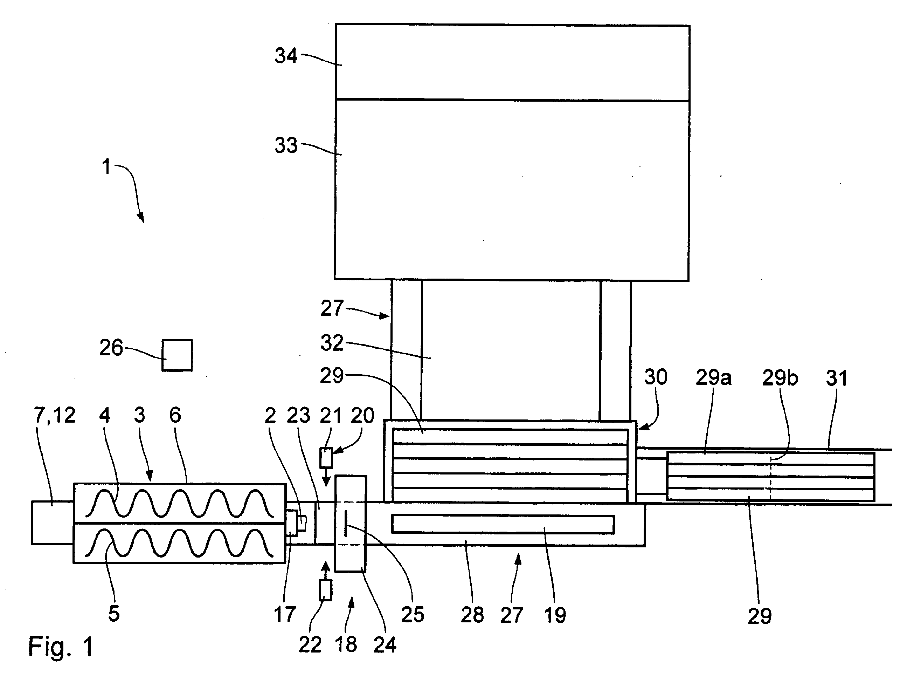

Eine Anlage 1 zur automatischen Herstellung von Backgut, im dargestellten Ausführungsbeispiel von Toastbrot, unter Verwendung eines Teigstranges 2 ist schematisch mit seinen Hauptkomponenten in der Fig. 1 in Draufsicht nicht maßstabsgetreu dargestellt.

Ein Zweiwellen-Teigkneter 3 dient einerseits als Kneteinrichtung zum Kneten eines Teiges aus bereitgestellten Ausgangsprodukten und andererseits als Extruder zum Extrudieren des Teigs in den Teigstrang 2. Der Teigkneter 3 hat zwei Knet/Extruderwellen 4, 5, die nebeneinander angetrieben drehbar in einem gemeinsamen Gehäuse 6 des Teigkneters 3 laufen. Ein Grundaufbau des Teigkneters 3 ist bekannt aus dem Prospekt "Kontinuierliche Knetmaschine ZPM" der Werner & Pfleiderer Industrielle Backtechnik, Druckdatum 9/2000. Ferner ist der Grundaufbau des Teigkneters 3 bekannt aus dem Fachartikel "Development of continuous vacuum dough preparation process for industrial bakeries (COVAD)" research summary sheet No. 2003-8, herausgegeben von der Campden & Chorleywood Food Research Association.

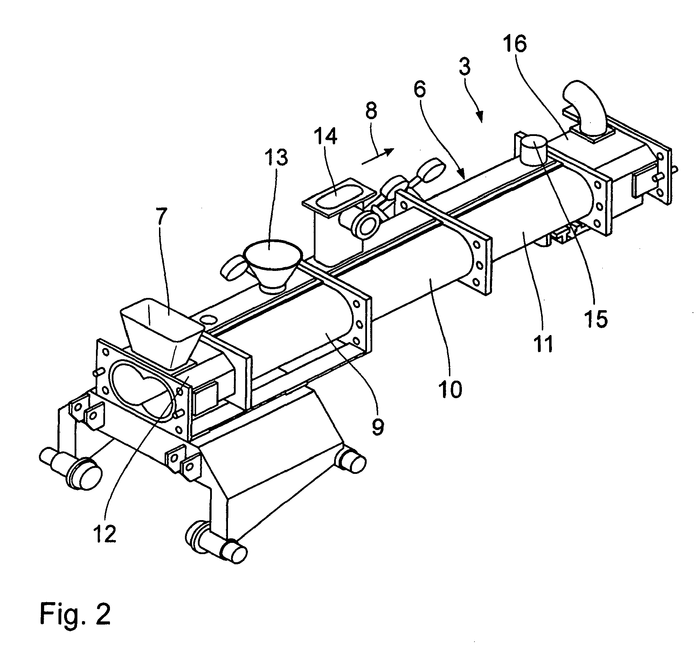

Fig. 2 zeigt Details des Teigkneters 3. Dieser hat einen Aufgabetrichter 7 zum Einfüllen des Teiges in das Gehäuse 6. Der Teig wird im Teigkneter 3 durch die beiden sich drehenden Wellen 4, 5 in der Fig. 2 in Richtung des Pfeils 8 transportiert. Das Gehäuse 6 ist in der Transportrichtung 8 unterteilt in drei Gehäuseabschnitte 9, 10, 11, die sich an einen Aufgabeabschnitt 12 mit dem Aufgabetrichter 7 anschließen. Im dem Aufgabeabschnitt 12 zunächst in der Transportrichtung 8 nachfolgenden Gehäuseabschnitt 9 wird über einen Druckanschluss 13 ein Überdruck erzeugt. Im Gehäuseabschnitt 9 kann ein Überdruck von beispielsweise 1,2 bar erreicht werden. Im Gehäuseabschnitt 9 liegt dann ein absoluter Druck von 1200 mbar vor. Im Gehäuseabschnitt 9 kann ein absoluter Druck im Bereich zwischen 1000 mbar und 3000 mbar eingestellt werden.

Im sich hieran in der Transportrichtung 8 anschließenden Gehäuseabschnitt 10 wird über einen Sauganschluss 14 ein Unterdruck erzeugt. Im Gehäuseabschnitt 10 kann ein gegenüber dem normalen Umgebungsdruck auf 300 mbar reduzierter Luftdruck erreicht werden. Im Gehäuse-Abschnitt 10 kann der absolute Luftdruck im Bereich zwischen nahe 0 mbar und dem Atmosphärendruck eingestellt werden.

Der Druckanschluss 13 kommuniziert mit einer nicht dargestellten Druckquelle. Der Sauganschluss 14 kommuniziert mit einer nicht näher dargestellten Vakuumpumpe.

Der sich in der Transportrichtung 8 anschließende Gehäuseabschnitt 11 hat eine Zugabeöffnung 15, über die dem Teig nach der Druckbehandlung im Gehäuseabschnitt 9 und nach der Vakuumbehandlung im Gehäuseabschnitt 10 noch weitere Bestandteile oder Additive zugegeben werden können. An diesen dritten Gehäuseabschnitt 11 schließt sich ein Ausgabeabschnitt 16 des Gehäuses 6 an. Der Ausgabeabschnitt 16 hat eine Düse 17 (vgl. Fig. 1), durch die der Teigstrang 2 extrudiert wird. Vom Teigstrang 2 ist in der Fig. 1 lediglich ein kurzer, gebrochener Abschnitt direkt nach der Düse 17 dargestellt. Anstelle einer einzelnen Düse 17 kann auch eine Doppeldüse oder es können mehrere, separate Düsen anstelle der Düse 17 vorgesehen sein.

Bei einer nicht dargestellten Variante der Anlage 1 ist der Düse 17 ein 90°-Bogenstück zur Umlenkung der Teigstrang-Transportrichtung nachgeordnet. Auch eine seitliche Anordnung der Düse 17 ist möglich, so dass eine Extrusionsrichtung des Teigstrangs 2 nicht parallel zur Längserstreckung der Knet/Extruderwellen 4, 5, sondern senkrecht hierzu liegt.

In Extrusionsrichtung des Teigstrangs 2 folgt der Düse 17 eine Portioniereinrichtung 18 nach zum Portionieren des Teigstrangs 2 in Teigstrangabschnitte 19.

Die Portioniereinrichtung 18 hat als Volumen-Messeinrichtung zum Messen des Volumens des Teigstrangs 2 eine optische Abtasteinrichtung 20. Diese ist bei der in der Fig. 1 dargestellten Ausführung als 3D-Scanner mit zwei Scaneinheiten 21, 22 ausgeführt. Anstelle der Scaneinheiten 21, 22 kann auch ein Ringsensor eingesetzt sein, der um ein angetriebenes Förderband 23 der Anlage 1 herum angeordnet ist, auf dem der Teigstrang 2 nach der Düse 17 gefördert ist. Anstelle der Scaneinheiten 21, 22 kann auch eine einzelne Kamera über dem Förderband 23 angeordnet sein. Entsprechende Volumen-Messeinheiten sind z. B. zur Fleischportionierung bekannt aus der WO 2007/022 782 A2 und aus der WO 2008/093 364 A1. Das Förderband 23 kann als angetriebene Pusherrolle ausgeführt sein.

Zur Portioniereinrichtung 18 gehört weiterhin ein Teigstrang-Schneidmesser 24 in Form einer Guillotine mit einer Schneidklinge 25. Die Scaneinheiten 21, 22 und das Schneidmesser 24 stehen über nicht dargestellte Signalleitungen mit einer zentralen Steuereinrichtung 26 in Signalverbindung, die die in der Fig. 1 dargestellten Hauptkomponenten der Anlage 1 auf der Grundlage von erfassten Betriebsdaten und von erfassten Messdaten, beispielsweise über die Scaneinheiten 21, 22, steuert.

Zum Fertigstellen des Backguts, also bei der dargestellten Ausführung der Toastbrote, aus den Teigstrang-Abschnitten 19 dient eine Nachbereitungsvorrichtung 27 der Anlage 1.

Zur Nachbereitungsvorrichtung 27 gehört bei der Ausführung nach Fig. 1 ein Wiege-/Messband 28, mit dem die Portionierung durch die Portioniereinrichtung 18 nochmals kontrolliert werden kann oder über die eine zur Portionierung mit der optischen Abtasteinrichtung 20 alternative Portionierung des Teigstrangs 2 in die Teigstrang-Abschnitte 19 bewerkstelligt werden kann. Das Wiege-/Messband 28 weist als Übergabeeinrichtung zum Zuführen der Teigstrang-Abschnitte 19 zu zugeordneten Aufnahmen 29a einer Transportform 29 eine Abwurfwalze auf, die in der Fig. 1 nicht näher dargestellt ist. Die Transportform 29 hat eine Mehrzahl von Aufnahmen 29a zur Aufnahme jeweils eines Teigstrang-Abschnitts 19. Die Transportform 29 stellt also einen Verband beispielsweise von zwei oder vier derartigen Aufnahmen 29a dar. Die Aufnahmen 29a haben eine Länge von bis zu 3.000 mm. Bei der dargestellten Ausführung haben die Aufnahmen 29a eine Länge im Bereich zwischen 1.850 und 2.000 mm. Da die Transport-form 29 nachfolgend auch durch einen Backofen geführt wird, werden die Transportform 29 bzw. die Aufnahmen 29a auch als Backformen bezeichnet.

Über die Abwurfwalze gelangt jeweils einer der Teigstrang-Abschnitte 19 zu einem Strangrollautomaten bzw. Strangroller 30 zum Strangrollen der Teigstrang-Abschnitte 19. Der Strangroller 30 kann als Teil der Übergabeeinrichtung zum Zuführen der Teigstrang-Abschnitte 19 zu den Transport-formen 29 verstanden werden. Der Strangrollautomat 30 kann, wie in der Fig. 1 dargestellt, zwei quer zur Extrusionsrichtung des Teigstrangs 2 nebeneinander liegende Strangroller aufweisen, denen jeweils eine der Transportformen 29 zugeordnet ist. Über die Abwurfwalze erfolgt eine alternierende Zugabe des Teigstrang-Abschnitts 19 zum jeweils Aufnahmebereiten der beiden Strangroller des Strangrollautomaten 30.

Jeder der Strangroller hat drei Walzen. Der dem Strangroller zugeführte Teigstrang-Abschnitt 19 wird zwischen zweien dieser drei Walzen gerollt. Eine darüber angeordnete dritte Walze ist in der Höhe so verstellbar, dass über ein entsprechendes Drücken dieser dritten Walze gegen den gerollten Teigstrang-Abschnitt 19 die Länge des Teigstrang-Abschnitts 19 einstellbar vorgegeben werden kann. Auf diese Weise wird die Länge des Teigstrang-Abschnitts 19 an die Länge der Aufnahmen 29a der zugeordneten Transportform 29 angepasst.

Der Strangrollautomat 30 hat eine Abwurfvorrichtung zum Abwerfen des jeweils langgerollten Teigstrang-Abschnitts 19 in die dem jeweiligen

Strangroller zugeordnete Transportform 29. Auch diese Abwurfvorrichtung stellt eine Komponente der Übergabeeinrichtung zum Zuführen der Teigstrang-Abschnitte 19 von der Portioniereinrichtung 18 hin zur jeweiligen Transportform 29 dar. Diese Übergabeeinrichtung steht mit einer Fördereinrichtung 31 für die Transportformen 29 über die Steuereinrichtung 26 zur Synchronisierung in Signalverbindung.

Nach dem Strangrollautomat kann ein Zuführband eingesetzt sein, das eine Zuführung der stranggerollten Teigstrang-Abschnitte 19 zu den Transportformen 29 gewährleistet.

Auf ein derartiges Zuführband kann auch verzichtet werden. In diesem Fall werden die Transportformen 29 mit der Übergabeeinrichtung unter den Strangrollautomaten 30 gefahren. Beim Öffnen der Walzen des Strangrollautomaten 30 gibt dieser den stranggerollten Teigstrang-Abschnitt 19 in einen Ablegestern ab. Dieser Ablegestem dreht sich um eine zur Längsachse der Teigstrang-Abschnitte parallele Achse und gibt durch diese Drehung den stranggerollten Teigstrang-Abschnitt 19 in die jeweilige Aufnahme 29a der Transportform 29 ab. Der Ablegestem dient als Zeitpuffer zwischen dem Strangrollautomaten 30 und einem nachfolgenden Formentransport. Zeittoleranzen zwischen einem Ablegezeitpunkt des Strangrollautomaten 30 und einer Bereitstellung der Transportform 20 werden hierdurch ausgeglichen.

Bei der dargestellten Ausführung befindet sich der Strangrollautomat 30 oberhalb der jeweils zugeführten Transportform 29 und ist auf einem Podest ausgeführt.

Die Positionierung der Teigstrang-Abschnitte 19 in die im jeweiligen Strangroller zugeordnete Transportform 29 wird mit hoher Positioniergenauigkeit vorgenommen. Bei einem beispielhaften Durchmesser der Teigstrang-Abschnitte 19 von 80 mm und einer Länge der Teigstrang-Abschnitte 19 von 1500 mm wird durch die Abwurfvorrichtung sichergestellt, dass die Teigstrang-Abschnitte zielgenau in die Aufnahmen 29a mit einer kurzen Seitenlänge von 100 mm eingeworfen werden. Die Positioniertoleranz der Abwurfvorrichtung quer zu den Teigstrang-Abschnitten 19 ist also besser als +/- 10 mm. Eine entsprechende Positioniergenauigkeit der Abwurfvorrichtung liegt auch in Längsrichtung der Teigstrang-Abschnitte 19 vor.

Die Fördereinrichtung 31 sorgt dafür, dass nach dem Strangrollen im Strangrollautomat 30 unterhalb der Abwurfvorrichtung des Strangrollautomaten 30 zeitrichtig eine aufnahmebereite Transportform 29 zur Aufnahme des langgerollten Teigstrang-Abschnitts 19 zur Verfügung steht.

Die Länge der Aufnahmen 29a kann auch einen Bruchteil der gesamten Länge der Transportform 29 darstellen. Dies ist in der Fig. 1 durch eine gestrichelte Trennlinie 29b verdeutlicht. In diesem Fall wird in der Transportform 29 die doppelte Anzahl von langgerollten Teigstrang-Abschnitten 19 der halben Länge aufgenommen. Es kann dann pro Transportform 29 eine entsprechend höhere Anzahl vorbereitender Strangroller im Strangrollautomaten 30 zum Einsatz kommen, beispielsweise vier Strangroller. Dies erhöht den Durchsatz der Anlage 1.

In Förderrichtung der langgerollten Teigstrang-Abschnitte 19 dem Strangrollautomaten 30 nachgeordnet ist eine weitere Fördereinrichtung 32 zum Fördern der Transportformen 29 vom Strangrollautomaten 30 hin zu einem Gärschrank bzw. Nachgärschrank 33. Diesem ist in Förderrichtung nachgeordnet ein Backofen 34. Die Übergabe von der Fördereinrichtung 32 hin zum Gärschrank 33 kann schrittweise erfolgen. Der Gärschrank 33 kann als Paternoster-Gärschrank ausgeführt sein.

Die Portioniereinrichtung 18 einerseits und das Wiege-/Messband 28 andererseits stellen Messstationen der Anlage 1 dar. Die optische Abtasteinrichtung 20 stellt eine Messstation zur Volumenmessung des Teigstrangs 2 dar.

Ein horizontaler Transport der Teigstrang-Abschnitte 19 quer zu deren Längserstreckung erfolgt bei der Anlage 1 bei der Zuführung der Teigstrang-Abschnitte 19 in den Strangrollautomaten 30, beim Abtransport der gerollten Teigstrang-Abschnitte 19 vom Strangrollautomaten 30 hin zur Transportform 29, also zur Ablage des weiter zu verarbeitenden Teigstrang-Abschnittsverbandes in den Aufnahmen 29a, beim Transport der Teigstrang-Abschnitte 19 durch den Gärschrank 33, beim Transport der Transportformen 29 vom Gärschrank 33 über eine Übergabeeinrichtung zu einem Transportband des Backofens 34, beim Transport der Transportformen 29 durch den als Tunnelofen ausgeführten Backofen 34 und beim Transport der Transportformen 29 nach einer Backofen-Entladeeinrichtung hin zu einer Konfektioniereinrichtung.

Ein vertikaler Transport der Teigstrang-Abschnitte 19 quer zu deren Längserstreckung erfolgt bei der Übergabe vom Zuführband bzw. Wiege-/Messband 28 in den Strangrollautomaten 30, bei der Übergabe der Teigstrang-Abschnitte 19 aus dem Strangrollautomaten 30 auf ein Zuführband zu den Aufnahmen 29a in der Transportform 29 und beim Transport der Transportformen 29 im Gärschrank 33.

Die Anlage 1 arbeitet zur Herstellung von gebackenem Backgut, insbesondere zur Herstellung von Toastbrot, folgendermaßen: Zunächst wird im Teigkneter 3 der über den Aufgabetrichter 7 zugegebene Teig aus den bereitgestellten Ausgangsprodukten geknetet und über die Düse 17 als Teigstrang 2 extrudiert. Alternativ kann der Teig vor dem Kneten zunächst aus kontinuierlich über eine nicht dargestellte Fördereinrichtung zugeführten Ausgangsprodukten erzeugt werden. Über die optische Abtasteinrichtung 20 erfolgt dann eine Volumenmessung des Teigstrangs 2. Dieser wird dann mit dem Schneidmesser 24 in die Teigstrang-Abschnitte 19 vorgegebenen Gewichts portioniert. Über das Förderband 23, das Wiege-/Messband 28, die Abwurfwalze, den Strangrollautomaten 30 und die Abwurfvorrichtung wird der portionierte Teigstrang-Abschnitt 19 langgerollt und in die ihm zugeordnete Aufnahme 29a der Transportform 29 zugeführt.

Anschließend werden die langgerollten Teigstrang-Abschnitte 19 mit den Transportformen 29, die von der Fördereinrichtung 31 bereitgestellt wurden, über die Fördereinrichtung 32 hin zum Gärschrank 33 transportiert. Dort werden die langgerollten Teigstrang-Abschnitte 19 gegärt. Im nachfolgenden Backofen 34 werden die gegärten Teigstrang-Abschnitte 19 zu den Toastbroten verbacken.

Beim Transport der Transportformen 29 vom Nachgärschrank 33 über eine Übergabeeinrichtung können die Transportformen 29 zusätzlich bedeckelt werden, um beispielsweise später eine quadratische Form von Toastbrotscheiben als Ergebnis der Teigverarbeitung zu gewährleisten. Deckel zum Bedeckeln der Transportformen 29 werden vor dem Backofen 34 von einer Quertransporteinrichtung, die die Deckel befördert, mit Hilfe eines Greifersystems auf die Transportformen 29 aufgesetzt. Nach einer Backofen-Entladeeinrichtung werden die Deckel wiederum mittels eines Greifersystems von den Transportformen 29 abgenommen und einer Deckelrücktransporteinrichtung zugeführt. Die Transportformen 29 mit den noch darin befindlichen gebackenen Teigstrang-Abschnitten 19, die dann als Brotstangen vorliegen, werden einer Formentleervorrichtung zugeführt. Mit Hilfe eines Saugsystems oder einer Formenwendevorrichtung werden die Transportformen 29 entleert und einer erneuten Belegung durch Teigstrang-Abschnitte zugeführt. Die Brotstangen werden anschließend auf Schneidfestigkeit gekühlt. Dies kann über ein kontinuierliches Gehängeträgersystem erfolgen. Hierbei werden die Brotstangen auf Träger geschoben, die beidseitig an Ketten befestigt vertikal und/oder horizontal ein entsprechendes Transportsystem während einer erforderlichen Kühlzeit transportieren. Alternativ zu einer Kühlung über das Gehängeträgersystem kann eine Inline-installierte Vakuumzelle zum Einsatz kommen. Eine solche Vakuumzelle kann gleichzeitig eine Kontamination der Brotstangen mit Sporen verhindern.

Mit der Anlage 1 lassen sich pro Stunde bis zu 7 Tonnen Teig verarbeiten, was einer Menge von etwa 12.000 Toastbroten pro Stunde mit einem Brotgewicht von 500 g entspricht. Eine typische Scheibengröße von 100 mm x 100 mm x 10 mm oder von 120 mm x 120 mm x 10 mm kann erzielt werden.

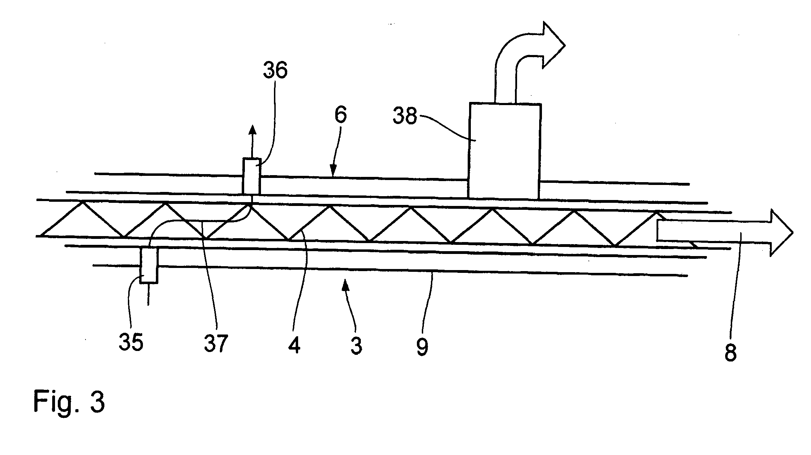

Fig. 3 zeigt eine Modifikation des Teigkneters 3 im Bereich eines der Gehäuseabschnitte 9 bis 11, beispielsweise im Bereich des Gehäuseabschnitts 9. In einem stromaufwärtigen Bereich des Gehäuseabschnittes 9 wird über einen Einlass 35 und einen dem Gehäuseabschnitt 9 gegenüberliegenden und in der Transportrichtung 8 versetzt angeordneten Auslass 36 ein Luftstrom 37 erzeugt. Hierzu kommuniziert der Einlass 35 mit einer entsprechenden Druckluftquelle. In einem stromabwärtigen Bereich des Gehäuseabschnitts 9 ist ein weiterer Luftauslass 38 angeordnet, über den wahlweise ein Unterdruck in diesem Bereich des Gehäuseabschnitts 9 erzeugt werden kann. Durch die Modifikation nach Fig. 3 lässt sich eine Feinvorgabe der Drickverhältnisse im Gehäuseabschnitt 9 erzielen. Dies kann beispielsweise zur gezielten Vergleichmäßigung der Porengröße und der Porendichte im erzeugten Teigstrang 2 herangezogen werden.

Dem Teigkneter 3 wird im Betrieb der Anlage 1 Wasser zusammen mit dem Teig zugegeben. Dieses Wasser kann mit Sauerstoff angereichert werden. Die Sauerstoffanreicherung kann beispielsweise durch Zugabe eines sauerstoffhaltigen Gases zur Erzeugung eines Sprühnebels geschehen, wie dies beispielsweise in der EP 1 714 556 A2 beschrieben ist.

Grundsätzlich kann an verschiedenen Stellen des 2-Wellen-Teigkneters 3 eine gezielte Zugabe von Flüssigkeiten, Gasen oder Feststoffen erfolgen, um hierdurch das Knetergebnis in einer für die Backgutherstellung förderlichen Weise zu beeinflussen.

Bei einer nicht dargestellten Ausführung kann eine Dichtemessung des Teigstrangs in einer beispielsweise als Röntgen-Durchstrahleinrichtung ausgeführten Messstation erfolgen.

## Patentansprüche

1. Verfahren zur Herstellung von Backgut unter Verwendung eines Teigstrangs (2) mit folgenden Schritten:
- Kneten eines Teigs aus bereitgestellten Ausgangsprodukten,
- Extrudieren des Teigs in den Teigstrang (2),
- Portionieren des Teigstrangs (2) in Teigstrang-Abschnitte (19) vorgegebenen Gewichts,
- Zuführen der Teigstrang-Abschnitte (19) zu zugeordneten Aufnahmen (29a) in mindestens einer Transportform (29),
- Gären der Teigstrang-Abschnitte (19) in der Transportform (29)
und
- Backen der gegärten Teigstrang-Abschnitte (19),
**dadurch gekennzeichnet, dass**
- nach dem Extrudieren des Teigstrangs (2) und vor dem Portionieren von diesem das Volumen des Teigstrangs (2) gemessen wird.

2. Verfahren nach Anspruch 1, **dadurch gekennzeichnet, dass** nach dem Extrudieren des Teigstrangs (2) und vor dem Portionieren von diesem die Dichte des Teigstrangs (2) gemessen wird.

3. Verfahren nach Anspruch 1 oder 2, **dadurch gekennzeichnet, dass** das Volumenmessen und/oder das Dichtemessen erfolgt, während der Teigstrang (2) mindestens eine entsprechende Messstation (20) durchläuft.

4. Verfahren nach Anspruch 1 oder 3, **dadurch gekennzeichnet, dass** das Volumenmessen optisch erfolgt.

5. Verfahren nach Anspruch 2 oder 4, **dadurch gekennzeichnet, dass** das Dichtemessen mithilfe von Röntgenstrahlen erfolgt.

6. Verfahren nach einem der Ansprüche 1 bis 5, **gekennzeichnet durch** ein Strangrollen der Teigstrang-Abschnitte (19) zwischen dem Portionieren und dem Zuführen.

7. Anlage (1) zur automatischen Herstellung von Backgut unter Verwendung eines Teigstrangs (2)
- mit einer Kneteinrichtung (3) zum Kneten eines Teiges aus bereitgestellten Ausgangsprodukten,
- mit einem Extruder (4) zum Extrudieren des Teigs in den Teigstrang (2),
- mit einer Portioniereinrichtung (18) zum Portionieren des Teigstrangs (2) in Teigstrang-Abschnitte (19) vorgegebenen Gewichts,
- mit einer Nachbereitungsvorrichtung (27) zum Fertigstellen des Backguts aus den Teigstrang-Abschnitten (19),
- wobei Aufnahmen in mindestens einer Transportform (29) der Nachbereitungsvorrichtung (27) als Backformen ausgebildet sind oder eine Transportform (29) der Nachbereitungsvorrichtung (27) selbst als Backform ausgebildet ist,
**dadurch gekennzeichnet, dass**
- die Portioniereinrichtung (18) eine Volumen-Messeinrichtung (20) zum Messen des Volumens des Teigstrangs (2) vor dem Portionieren umfasst.

8. Anlage nach Anspruch 7, **dadurch gekennzeichnet, dass** die Nachbereitungsvorrichtung (27) umfasst:
- die mindestens eine Transportform (29),
- eine Übergabeeinrichtung zum Zuführen der Teigstrang-Abschnitte (19) zu zugeordneten Aufnahmen (29a) in der mindestens einen Transportform (29),
- einen Gärschrank (33) zum Gären der Teigstrang-Abschnitte (19) in der Transportform (29),
- einen Backofen (34) zum Backen der Teigstrang-Abschnitte (19).

9. Anlage nach Anspruch 7 oder 8, **dadurch gekennzeichnet, dass** die Portioniereinrichtung (18) eine Dichte-Messeinrichtung zum Messen der Dichte des Teigstrangs (2) umfasst.

10. Anlage nach Anspruch 7 oder 9, **dadurch gekennzeichnet, dass** die Volumen-Messeinrichtung (20) und/oder die Dichte-Messeinrichtung als Messstation ausgebildet ist, die zum Durchlaufen des Teigstrangs (2) ausgebildet ist.

11. Anlage nach einem der Ansprüche 8 bis 10, **gekennzeichnet durch** einen Strangrollautomaten (30) mit mindestens einem Strangroller zum Strangrollen der Teigstrang-Abschnitte (19) im Förderweg des Teigstrangs zwischen der Portioniereinrichtung (18) und der Aufnahme (29a) in der mindestens einen Transportform (29).

12. Anlage nach Anspruch 11, **gekennzeichnet durch** mindestens zwei Strangroller, die derart synchronisiert sind, dass sie portionierte Teigstrang-Abschnitte (19) im Wechsel bearbeiten.

13. Anlage nach einem der Ansprüche 8 bis 12, **dadurch gekennzeichnet, dass** die Übergabeeinrichtung mit einer Fördereinrichtung (31) für die mindestens eine Transportform (29) in Synchronisations-Signalverbindung steht.

## Claims

1. Method for the production of baked goods using a dough strand (2) comprising the following steps:
- kneading a dough from prepared starting products,
- extruding the dough to form the dough strand (2),
- dividing the dough strand (2) into dough strand portions (19) of a predetermined weight,
- supplying the dough strand portions (19) to associated receivers (29a) in at least one transporting mould (29),
- fermenting the dough strand portions (19) in the transporting mould (29) and
- baking the fermented dough strand portions (19),
**characterised in that**
- the volume of the dough strand (2) is measured after the extrusion of the dough strand (2) and before it is divided into portions.

2. Method according to claim 1, **characterised in that** the density of the dough strand (2) is measured after the extrusion of the dough strand (2) and before it is divided into portions.

3. Method according to claim 1 or 2, **characterised in that** the volume measurement and/or the density measurement takes place while the dough strand (2) runs through at least one corresponding measuring station (20).

4. Method according to claim 1 or 3, **characterised in that** the volume measurement takes place optically.

5. Method according to claim 2 or 4, **characterised in that** the density measurement takes place with the aid of X-ray beams.

6. Method according to any one of claims 1 to 5, **characterised by** strand-rolling the dough strand portions (19) between the division into portions and supplying.

7. Plant (1) for the automatic production of baked goods using a dough strand (2)
- with a kneading device (3) for kneading a dough from prepared starting products,
- with an extruder (4) for extruding the dough to form the dough strand (2),
- with a portioning device (18) to divide the dough strand (2) into dough strand portions (19) of a predetermined weight,
- with a post-preparation device (27) for finishing the baked goods from the dough strand portions (19).
- wherein receivers in at least one transporting mould (29) of the post-preparation device (27) are configured as baking moulds or a transporting mould (29) of the post-preparation device (27) is itself configured as baking mould,
**characterised in that**
- the portioning device (18) comprises a volume measuring device (20) to measure the volume of the dough strand (2) prior to portioning.

8. Plant according to claim 7, **characterised in that** the post-preparation device (27) comprises:
- at least one transporting mould (29),
- a transfer device for supplying the dough strand portions (19) to associated receivers (29a) in the at least one transporting mould (29),
- a fermenting cabinet (33) to ferment the dough strand portions (19) in the transporting mould (29),
- a baking oven (34) for baking the dough strand portions (19).

9. Plant according to claim 7 or 8, **characterised in that** the portioning device (18) comprises a density measuring device to measure the density of the dough strand (2).

10. Plant according to claim 7 or 9, **characterised in that** the volume measuring device (20) and/or the density measuring device is configured as a measuring station, which is configured for the dough strand (2) to run through.

11. Plant according to any one of claims 8 to 10, **characterised by** an automatic strand rolling machine (30) with at least one strand roller for strand rolling the dough strand portions (19) in the conveying path of the dough strand between the portioning device (18) and the receiver (29a) in the at least one transporting mould (29).

12. Plant according to claim 11, **characterised by** at least two strand rollers, which are synchronised in such a way that they alternately process divided dough strand portions (19).

13. Plant according to any one of claims 8 to 12, **characterised in that** the transfer device has a synchronisation signal connection with a conveying device (31) for the at least one transporting mould (29).

## Revendications

1. Procédé de production de produits de boulangerie, moyennant l'emploi d'un boudin de pâte (2), comprenant les étapes suivantes :
- pétrissage d'une pâte à partir de produits de départ préparés,
- extrusion de la pâte en un boudin de pâte (2),
- division du boudin de pâte (2) en segments de boudin de pâte (19) d'un poids prédéterminé,
- transfert des segments de boudin de pâte (19) sur des supports (29a) correspondants dans au moins une forme de transport (29),
- fermentation des segments de boudin de pâte (19) dans la forme de transport (29), et
- cuisson des segments de boudin de pâte (19) fermentés,
**caractérisé en ce**
- **qu**'après l'extrusion du boudin de pâte (2), et avant la division de celui-ci, le volume du boudin de pâte (2) est mesuré.

2. Procédé selon la revendication 1 **caractérisé en ce qu**'après l'extrusion du boudin de pâte (2), et avant la division de celui-ci, la densité du boudin de pâte (2) est mesurée.

3. Procédé selon les revendications 1 ou 2 **caractérisé en ce que** la mesure du volume et/ou la mesure de la densité sont effectuées pendant que le boudin de pâte (2) passe dans au moins une station de mesure (20) appropriée.

4. Procédé selon les revendications 1 ou 3 **caractérisé en ce que** la mesure du volume est exécutée par voie optique.

5. Procédé selon les revendications 2 ou 4 **caractérisé en ce que** la mesure de la densité est exécutée à l'aide de rayons X.

6. Procédé selon l'une des revendications de 1 à 5 **caractérisé par** un façonnage en boudins des segments de boudin de pâte (19) entre la division en portions et le transfert.

7. Installation (1) pour la production automatique de produits de boulangerie, moyennant l'emploi d'un boudin de pâte (2),
- comprenant un équipement de pétrissage (3) pour le pétrissage d'une pâte à partir de produits de départ préparés,
- comprenant une extrudeuse (4) pour l'extrusion de la pâte en un boudin de pâte (2),
- comprenant un équipement de division en portions (18) pour la division du boudin de pâte (2) en segments de boudin de pâte (19) de poids prédéterminé,
- comprenant un dispositif de post-préparation (27) pour la finition des produits de boulangerie à partir des segments de boudin de pâte (19),
- des prélèvements dans au moins une forme de transport (29) du dispositif de post-préparation (27) étant conçus sous l'aspect de formes de cuisson ou une forme de transport (29) du dispositif de post-préparation (27) étant elle-même sous la forme d'une forme de cuisson,
**caractérisée en ce que**
- l'équipement de division en portions (18) comporte un équipement de mesure de volume (20) pour la mesure du volume du boudin de pâte (2) avant la division en portions.

8. Installation selon la revendication 7 **caractérisée en ce que** le dispositif de post-préparation (27) comprend :
- au moins une forme de transport (29),
- un équipement de transfert pour le déplacement des segments de boudin de pâte (19) en prélèvements (29a) correspondants dans au moins la forme de transport (29),
- une armoire de fermentation (33) pour la levée des segments de boudin de pâte (19) dans la forme de transport (29),
- un four de cuisson (34) pour la cuisson des segments de boudin de pâte (19).

9. Installation selon les revendications 7 ou 8 **caractérisée en ce que** l'équipement de division en portions (18) comprend un équipement de mesure de la densité pour la mesure de la densité du boudin de pâte (2).

10. Installation selon les revendications 7 ou 9 **caractérisée en ce que** l'équipement de mesure du volume (20) et/ou l'équipement de mesure de la densité sont conçus sous la forme de stations de mesure qui sont conçues pour un passage en continu du boudin de pâte (2).

11. Installation selon l'une des revendications de 8 à 10 **caractérisée par** des automates de façonnage en boudins (30) comprenant au moins un façonneur en boudins pour la mise en forme de boudin des segments de boudin de pâte (19) sur le trajet de transport du boudin de pâte entre l'équipement de division en portions (18) et le prélèvement (29a) dans au moins une forme de transport (29).

12. Installation selon la revendication 11 **caractérisée par** au moins deux façonneurs en boudins qui sont synchronisés de telle manière qu'ils traitent les segments de boudin de pâte (19) divisés en alternance.

13. Installation selon l'une des revendications 8 à 12 **caractérisée en ce que** l'équipement de transfert est en relation par signaux de synchronisation avec l'équipement de transport (31) pour l'au moins une forme de transport (29).
